# EUROPÄISCHE PATENTSCHRIFT

(11) **EP 3 233 567 B1**
(45) Veröffentlichungstag und Bekanntmachung des Hinweises auf die Patenterteilung: **11.11.2020**
(21) Anmeldenummer: 15813048.4
(22) Anmeldetag: 16.12.2015
(51) Int. Cl.: B60N 2/80, B60N 2/28

(54) **KOPFSTÜTZE UND VERFAHREN ZUR MONTAGE EINER KOPFSTÜTZE**
HEADREST AND METHOD FOR MOUNTING A HEADREST
APPUIE-TÊTE ET PROCÉDÉ DE MONTAGE D'UNE APPUIE-TÊTE

(30) Priorität: 18.12.2014 DE 102014226438
(43) Veröffentlichungstag der Anmeldung: 25.10.2017
(73) Patentinhaber: Adient Luxembourg Holding S.à r.l., 1855 Luxembourg (LU)
(72) Erfinder: DILLINGER, Thomas, 40880 Ratingen (DE)
(74) Vertreter: Loock, Jan Pieter
(86) Internationale Anmeldenummer: PCT/EP2015/080078
(87) Internationale Veröffentlichungsnummer: WO 2016/097041

(56) Entgegenhaltungen:
- EP-A1- 2 626 238
- EP-A1- 2 639 102
- US-A- 5 180 207

## Beschreibung

### Stand der Technik

Die vorliegende Erfindung betrifft eine Kopfstütze mit einem Flügelelement und ein Verfahren zur Montage einer Kopfstütze mit einem Flügelelement.

Aus dem Stand der Technik sind Kopfstützen mit verstellbaren Flügelelementen hinreichend bekannt. Allerdings sind aus den Druckschriften DE 10 196 653 und WO 95 / 09 742 nur solche Kopfstützen bekannt, die vergleichsweise kompliziert ausgestaltet und daher schwer zu montieren sind. Die in der Druckschrift EP 2 611 652 A1 vorgestellte Kopfstütze hingegen ist vergleichsweise einfach zu montieren und lässt sich zwischen zwei Positionen verstellen. Die Druckschrift EP 2 639 102 A1 ist einer Kopfstütze mit einem Basiselement und verstellbaren Flügelelementen gewidmet. Die Flügelelemente sind um eine Welle mit einer Reibrastfunktionalität schwenkbar.

### Offenbarung der Erfindung

Es ist eine Aufgabe der vorliegenden Erfindung eine Kopfstütze mit Flügelelementen bereitzustellen, die gegenüber den aus dem Stand der Technik bekannten - insbesondere in Hinblick auf eine Handhabe der Flügelelemente bei deren Überführung zwischen zwei Einstellpositionen - weiter verbessert ist.

Die vorliegende Erfindung löst die Aufgabe durch eine Kopfstütze nach Anspruch 1. Die Kopfstütze weist ein Basiselement auf, an dem ein Flügelelement mittels eines Scharniers um eine im Wesentlichen vertikal verlaufende Achse drehbar gelagert ist, wobei das Scharnier für das Ausbilden einer Reibrastfunktionalität eine Welle mit einem Vorsprung, insbesondere mit einem Nocken, und eine Buchse mit einer dem Vorsprung zugeordneten Aufnahme, insbesondere einer Vertiefung, aufweist, wobei die Welle in der Buchse gelagert ist und der Vorsprung in einer Einraststellung in die Aufnahme eingreift.

Das Scharnier der erfindungsgemäßen Kopfstütze umfasst die Aufnahme, die dem Vorsprung zugeordnet ist und dabei beispielsweise komplementär zum Vorsprung ausgestaltet ist. In diese Aufnahme greift der Vorsprung ein und fixiert dadurch das Flügelelement in einer Einstellposition, die sich der Einraststellung zuordnen lässt, und verhindert ein weiteres Verschwenken. Dank der Reibrastfunktionalität wird dabei in vorteilhafter Weise dafür gesorgt, dass einer Überführungsbewegung des Flügelelements zwischen zwei Einraststellungen eine Reibkraft entgegenwirkt. Bei der Überführungsbewegung nimmt das Scharnier eine Übergangsstellung ein, in der der Vorsprung außerhalb der Aufnahme angeordnet ist. Insbesondere ist es dabei vorgesehen, dass der Vorsprung bei der Überführungsbewegung des Flügelelements zwischen zwei Einstellpositionen entlang einer Innenseite der Buchse bewegt wird und durch das Eingreifen des Vorsprungs in die Aufnahme einrastet, wodurch die die Überführungsbewegung begleitende Reibkraft im Wesentlichen aufgehoben wird. Durch die erfindungsgemäße Ausgestaltung des Scharniers ist es dann in vorteilhafter Weise möglich, einem Insassen ein Einrastgefühl zu vermitteln, anhand dessen der Insasse das Einnehmen einer Einstellposition des Flügelelements feststellen kann. Außerdem wirkt der eingerastete Vorsprung einem ungewollten Verschwenken des Flügelelements entgegen.

Vorzugsweise ist das Flügelelement zwischen einer nachhinten geklappten Einstellposition und einer nachvorne geklappten Einstellposition reversibel überführbar. Weiterhin ist es vorgesehen, dass eine Innenseite der Buchse im Wesentlichen konzentrisch zur Drehachse verläuft und vorzugsweise erstreckt sich die Aufnahme teilweise oder vollständig im Wesentlichen parallel zur Drehachse, d. h. in radiale Richtung, entlang der Innenseite der Buchse. Weiterhin ist es vorgesehen, dass sich der Vorsprung entlang der Welle im Wesentlichen parallel zur Drehachse, vorzugsweise vollständig über einem Bereich, der innerhalb der Buchse angeordnet ist, erstreckt. Beispielsweise weist der Vorsprung in einer senkrecht zur Drehachse verlaufenden Schnittebene einen halbkreisförmigen Kantenverlauf bzw. eine Wölbung auf und die Buchse weist in derselben Schnittebene eine halbkreisförmige Vertiefung bzw. Nische auf, die als Aufnahme dient. Vorzugsweise sind pro Flügelelement zwei Scharniere vorgesehen, die besonders bevorzugt fluchtend zueinander angeordnet sind. Vorzugsweise sind die Scharniere im Wesentlichen identisch aufgebaut und ganz besonders bevorzugt spiegelsymmetrisch zueinander vorgesehen.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer weiteren Ausführungsform der vorliegenden Erfindung ist vorgesehen, dass die Welle basiselementseitig und die Buchse flügelelementseitig angeordnetsind. Insbesondere ist es vorgesehen, dass die Buchse integraler Bestandteil des Flügelelements ist und/oder die Welle ein integraler Bestandteil des Basiselements ist. Dabei ist es insbesondere vorgesehen, dass die Welle als Zapfen ausgestaltet ist, der zur Lagerung in die Buchse eingreift.

Gemäß einer weiteren Ausführungsform der vorliegenden Erfindung ist vorgesehen, dass die Buchse, insbesondere die Innenseite der Buchse, zumindest teilweise elastisch deformierbar ausgestaltet ist. Bei einer Überführung des Flügelelements wirkt der Vorsprung, insbesondere der Nocken, mit der Innenseite der Buchse zusammen. Insbesondere wirkt die Buchse dabei durch ihre elastische Deformierbarkeit auf die Welle wie eine Feder, deren Rückstellkraft dafür sorgt, dass das Flügelelement, beispielsweise nach hinten, klappbar bzw. verschwenkbar ist oder, dass das Flügelelement in einer Einstellposition, beispielsweise in der nach vorne geklappten Einstellposition, fixiert ist.

Gemäß einer weiteren Ausführungsform der vorliegenden Erfindung ist vorgesehen, dass der Vorsprung in der Übergangsstellung die Buchse elastisch deformiert. Insbesondere drückt der Vorsprung dabei in radialer Richtung, d. h. in einer senkrecht zur Drehachse verlaufenden Richtung gegen die Innenseite der Buchse.

Gemäß einer weiteren Ausführungsform der vorliegenden Erfindung ist vorgesehen, dass für den Vorsprung neben der Aufnahme mindestens eine weitere Aufnahme vorgesehen ist. Insbesondere greift der Vorsprung in einer weiteren Einraststellung, die vorzugsweise einer weiteren Einstellposition des Flügelelements zugeordnet ist, in die weitere Aufnahme ein. Dabei legt der Abstand zwischen der Aufnahme und der weiteren Aufnahme fest, um welchen Winkel das Flügelelement zwischen der Einstellposition und der weiteren Einstellposition verschwenkbar ist. Insbesondere ist es vorstellbar, dass der Bereich zwischen der Aufnahme und der weiteren Aufnahme elastisch deformierbar ist. Weiterhin ist es vorstellbar, dass der Bereich der Aufnahme, d. h. der Bereich der Vertiefung in der Buchse, ebenfalls elastisch deformierbar ist oder die gesamte Buchse an ihrer Innenseite elastisch deformierbar ist.

Gemäß einer weiteren Ausführungsform der vorliegenden Erfindung ist vorgesehen, dass sich die weitere Aufnahme von der Aufnahme in Hinblick auf Größe und/oder Form unterscheidet. Dadurch lässt sich bewirken, dass sich ein Kraftaufwand für das Verlassen der Einraststellung von dem Kraftaufwand für das Verlassen der weiteren Einraststellung unterscheidet.

Gemäß einer weiteren Ausführungsform der vorliegenden Erfindung ist es vorgesehen, dass die Welle eine Mehrzahl an Vorsprüngen, vorzugsweise vier Vorsprünge, aufweist. Beispielsweise sind die Vorsprünge an der Welle an gegenüberliegenden Seiten angeordnet. Insbesondere ist es vorgesehen, dass die Vorsprünge entlang des Umfangs der Welle gleichmäßig verteilt sind. Dadurch lassen sich die bei der Überführung des Flügelelements auf die elastisch deformierbaren Bereiche der Buchse wirkenden Kräfte gleichmäßig verteilen.

Erfindungsgemäß ist es vorgesehen, dass die Buchse und die Welle kegelstumpfförmig ausgestaltet sind.

Gemäß einer weiteren Ausführungsform der vorliegenden Erfindung ist vorgesehen, dass ein Axialanschlag und/oder eine Radialanschlag vorgesehen ist. Insbesondere weist die Welle einen Axialanschlag auf, mit dem verhindert wird, dass sich die Welle selbsttätig aus der Ausnehmung löst. Vorzugsweise weist die Kopfstütze einen Radialanschlag auf, mit dem verhindert wird, dass sich die Flügelelemente um ein bestimmtes Maß hinaus verdrehen. Dieser Anschlag kann insbesondere bei einer Unfallsituation von Bedeutung sein um zu verhindern, dass sich die Flügelelemente zu weit vom Kopf des Insassen wegbewegen. Mit dem Anschlag kann aber auch eine sonstige Verletzung eines Fahrzeuginsassen vermieden werden.

Vorzugsweise können die Flügelelemente in eine Vielzahl von Einstellpositionen relativ zu dem Basiselement eingestellt werden. Beispielsweise können die Flügelelemente auch in eine Verstauposition verbracht werden, in der sie parallel zu dem Basiselement insbesondere an diesem anliegend angeordnet sind.

Gemäß einer weiteren Ausführungsform der vorliegenden Erfindung ist vorgesehen, dass jedes Flügelelement eine Tragstruktur aufweist, die zweiteilig vorgesehen ist. Vorzugsweise werden diese beiden Teile bei der Montage des Flügelelementes an dem Basiselement miteinander verbunden, vorzugsweise zusammengesteckt. Ganz besonders bevorzugt erfolgt das Zusammenstecken während oder nachdem die Welle in die Buchse des Basiselementes eingeführt wird.

Vorzugsweise weist die Kopfstütze ein Sicherungsmittel auf, mit dem der Verbund der beiden Teile des Flügelelementes gesichert wird, nachdem diese zusammengesteckt worden sind.

Ein weiterer Gegenstand der vorliegenden Erfindung ist ein Verfahren zur Montage einer erfindungsgemäßen Kopfstütze, wobei das Flügelelement entlang einer im Wesentlichen horizontal verlaufenden Richtung bewegt wird bis die die Welle in der Buchse einrastet. Vorzugsweise schlägt die Buchse beim Einrasten mit einer ihrer Stirnseiten an den Axialanschlag an.

Das erfindungsgemäße Verfahren hat den Vorteil, dass die Flügelelemente sehr einfach an dem Basiselement befestigt werden können.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Figur** 1 zeigt eine Kopfstütze gemäß einer beispielhaften Ausführungsform der vorliegenden Erfindung.
Die Figur 2 zeigt in Schnittansichten ein Scharnier für eine Kopfstütze gemäß der beispielhaften Ausführungsform der vorliegenden Erfindung.
Die Figur 3 zeigt in perspektivischen Ansichten von rechts nach links ein Buchse, eine Welle und ein Scharnier zusammengesetzt aus Buchse und Welle für eine Kopfstütze gemäß der beispielhaften Ausführungsform der vorliegenden Erfindung.
Die **Figur 4** zeigt die Kopfstütze gemäß der beispielhaften Ausführungsform der vorliegenden Erfindung ohne Polsterung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

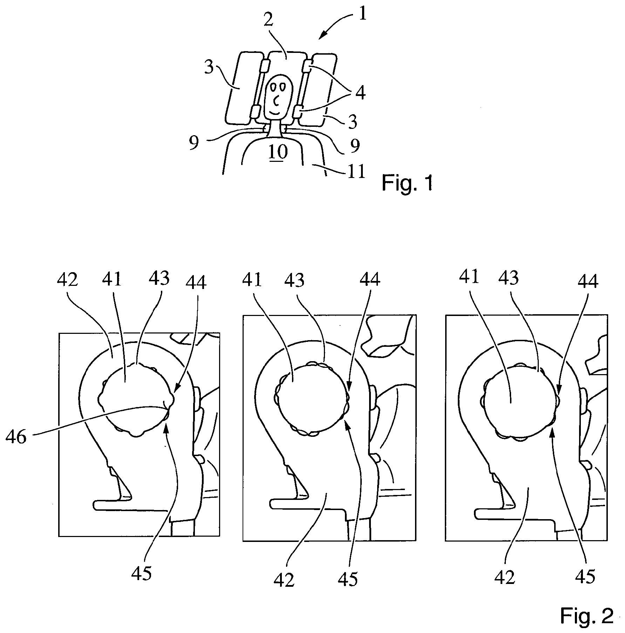

In **Figur 1** ist eine Kopfstütze 1 gemäß einer beispielshaften Ausführungsform der vorliegenden Erfindung dargestellt, die mittels Haltestangen 9 an der Rückenlehne 11 eines Fahrzeugsitzes vorgesehen ist. Der Fahrzeugsitz wird von einem Sitzinsassen 10 belegt. Die Kopfstütze 1 besteht vorzugsweise aus einem Basiselement 2, an dem die Haltestangen 9 vorgesehen sind, mit denen das Basiselement 2 an der Rückenlehne 11 befestigt ist. Insbesondere ist die Kopfstütze 1 höhenverstellbar und/oder in ihrer Neigung vom Kopf des Sitzinsassen 10 hin oder weg verstellbar vorgesehen. Weiterhin ist hierbei bevorzugt vorgesehen, dass die Kopfstütze 1 rechts und links vom Basiselement 2 jeweils ein Flügelelement 3 aufweist, wobei das Flügelelement 3 jeweils mittels jeweils zwei Scharnieren 4 an dem Basiselement 2 montiert ist. Die beiden Scharniere 4 stellen eine vertikale Achse 12 dar, um die das Flügelelement 3 drehbar gelagert ist. Jedes Flügelelement 3 kann in eine Vielzahl von Positionen eingestellt werden. Ganz besonders bevorzugt kann das Flügelelement 3 auch in eine Stauposition gebracht werden, in der es sich im Wesentlichen parallel und an dem Basiselement 2 anliegend angeordnet ist. Insbesondere ist es vorgesehen, dass das Flügelelement 3 zwischen einer nachvorne geklappten Einstellposition und einer nachhinten geklappten Einstellposition reversibel überführbar ist. Beispielsweise dient das nachvorne geklappte Flügelelement dann zum Sonnenschutz oder zum seitlichen Anlehnen des Kopfs des Sitzinsassen 10.

In **Figur 2** ist in einer Schnittansicht das Scharnier 4 der Kopfstütze 1 gemäß der beispielhaften Ausführungsform der vorliegenden Erfindung in drei verschiedenen Positionen des Flügelelements 3 dargestellt. Die gewählte Ebene für die Schnittansicht verläuft dabei im Wesentlichen horizontal durch das Scharnier 4, d. h. senkrecht zur Achse. Zur Ausbildung einer Reibrastfunktionalität umfasst das Scharnier 4 basiselementseitig eine Welle 41 mit mindestens einem Vorsprung 43, hier vier Vorsprüngen 43, und ein Buchse 42 mit jeweils einer dem Vorsprung zugeordneten Aufnahme 44, insbesondere Vertiefung, und eine dem Vorsprung zugeordneten weiteren Aufnahme 45, insbesondere weitere Vertiefung. Dabei ist es vorgesehen, dass die Welle 41 in der Buchse 42 schwenkbar gelagert ist. Weiterhin ist es vorgesehen, dass der Vorsprung 43 - wie in der linken Abbildung der Figur 2 gezeigt - in einer Einraststellung in die Aufnahme 44 eingreift und - wie in der rechten Abbildung der Figur 2 gezeigt - in einer weiteren Einraststellung in die weitere Aufnahme 45 eingreift. Zur reversiblen Überführung zwischen der Einraststellung und der weiteren Einraststellung ist es vorgesehen, dass der Vorsprung 43 in einer Übergangstellung entlang einer Innenseite 46 der Buchse 42 zwischen der Aufnahme 44 und der weiteren Aufnahme 45 geführt, insbesondere unter Kontakt mit der Buchse bewegt wird. Insbesondere ist ein Bereich der Buchse 42 zwischen der Aufnahme 44 und der weiteren Aufnahme 45 elastisch deformierbar ausgestaltet. Insbesondere sind
-- die Welle 41 mit dem Vorsprung 43 und
-- die Buchse 42 mit der Aufnahme 44 und der weiteren Aufnahme 45
derart ausgestaltet, dass der Vorsprung 43 in der Übergangsstellung gegen die deformierbare Innenseite 46 der Buchse 42 drückt. Insbesondere ist die Innenseite 46 der Buchse 42 zwischen der Aufnahme 44 und der weiteren Aufnahme 45 in der Übergangsstellung gegen den Vorsprung 45 und damit gegen die Welle 41 vorgespannt. Dadurch wird eine Reibkraft verursacht, die einer Übergangsbewegung, mit der das Flügelelement 3 zwischen der Einraststellung und der weiteren Einraststellung reversibel überführt wird, entgegenwirkt. Insbesondere wird durch die Ausgestaltung des elastisch deformierbaren Bereichs und einer Tiefe der Aufnahme 44 bzw. einer weiteren Tiefe der weiteren Aufnahme 45 ein Einrastgefühl festgelegt, mit dem der Insasse 10 das Einrasten des Flügelelements 3 in der Einraststellung, oder in der weiteren Einraststellung registriert. Weiterhin ist es vorgesehen, dass sich die Tiefe der Aufnahme 44 von der weiteren Tiefe der weiteren Aufnahme 45 unterscheidet. Insbesondere ist die weitere Tiefe kleiner als die Tiefe. Beispielsweise beträgt das Verhältnis der weiteren Tiefe zur Tiefe 0.6. Dadurch lässt sich in vorteilhafter Weise eine Einraststärke in der Einraststellung realisieren, die gegenüber der Einraststärke in der weiteren Einraststellung größer ist. Darüber hinaus übernimmt die zumindest teilweise elastisch deformierbare Buchse 42 die Aufgabe eine Feder, die dafür sorgt, dass das Flügelelement 3 nach hinten verschwenkt wird oder in der Einraststellung oder in der weiteren Einraststellung gehalten bzw. fixiert wird. Weiterhin ist es vorgesehen, dass eine Mehrzahl an Vorsprüngen 43, vorzugsweise vier Vorsprünge 43, mit jeweils zugeordneter Aufnahme 44 und weiterer Aufnahme 45 vorgesehen sind, wobei die Vorsprünge 43 bzw. die Aufnahme 44 entlang des Umfangs der Welle 41 bzw. der Innenseite 46 der Buchse 42 gleichmäßig verteilt sind. Weiterhin ist es vorgesehen, dass von dieser Mehrzahl an Vorsprüngen 43 an der Welle 41 bzw. an Aufnahmen 44 jeweils zwei Vorsprünge 43 bzw. zwei Aufnahmen 44 einander gegenüberliegen. Weiterhin ist es vorgesehen, dass die Abstände zwischen der Aufnahme 44 und der weiteren Aufnahme 45 entlang einer an der Innenseite 46 der Buchse 42 verlaufenden Umlaufrichtung für mehrere Aufnahmen 44 der Mehrzahl an Aufnahmen 44 im Wesentlichen gleich groß sind.

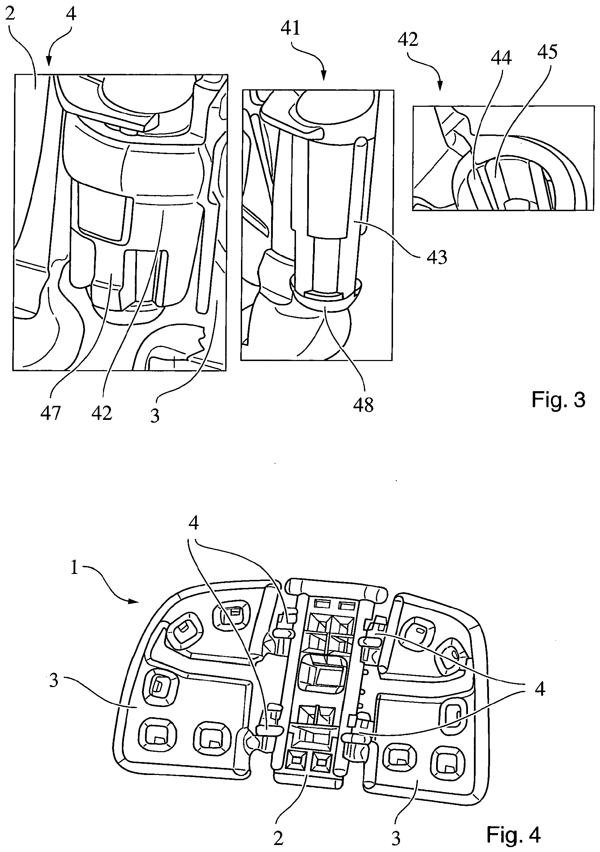

In **Figur 3** ist in perspektivischen Ansichten das Scharnier 4 der Kopfstütze gemäß der beispielhaften Ausführungsform der vorliegenden Erfindung dargestellt, wobei in der mittleren Abbildung der Figur 3 die basiselementseitige Welle 41 und in der rechten Abbildung der Figur 3 die flügelelementseitige Buchse 42 jeweils einzeln illustriert sind, während in der linken Abbildung der Figur 3 Buchse 42 und Welle 41 zum Scharnier 4 zusammengefügt sind. Dabei ist es insbesondere vorgesehen, dass die Buchse 42 zumindest teilweise außerhalb des Bereichs zwischen der Aufnahme 44 und der weiteren Aufnahme 45 Aussparungen bzw. Leerräume aufweist. Auf diese Weise wird in vorteilhafter Weise Material gespart. Insbesondere umfasst die Buchse 42 parallel zur Drehachse verlaufende Stege 47, in die jeweils eine Aufnahme 44, eine weitere Aufnahme 45 und ein deformierbaren Bereich zwischen der Aufnahme 44 und der weiteren Aufnahme 45 integriert sind. Insbesondere ist es vorgesehen, dass die Stege 47 bis zu einem Axialanschlag 48 der Welle 41 ragen. Darüber hinaus ist es vorstellbar, dass die Buchse 42 in axialer Richtung betrachtet in etwa zur Hälfte vollständig geschlossen ist und zur anderen Hälfte aus Stegen 47 besteht.

In **Figur 4** ist die Kopfstütze 1 gemäß der beispielhaften Ausführungsform der vorliegenden Erfindung ohne Polsterung dargestellt. Es ist zu erkennen, dass die am Basiselement 2 gegenüberliegend angeordneten Flügelelemente 3 jeweils über zwei Scharniere 4 mit dem Basiselement 2 verbunden sind. Die Flügelelemente 3 sind dabei vorzugsweise zueinander spiegelverkehrt ausgestaltet und weisen Strukturteile auf, über die beispielsweise eine Polsterung an dem Flügelelement 3 angebracht werden kann.

### Bezugszeichenliste

- 1: Kopfstütze
- 2: Basiselement
- 3: Flügelelement
- 4: Scharnier
- 9: Haltestange
- 10: Rückenlehne
- 11: Insasse
- 41: Welle
- 42: Buchse
- 43: Vorsprung
- 44: Aufnahme
- 45: weitere Aufnahme
- 46: Innenseite
- 47: Steg
- 48: Axialanschlag

## Patentansprüche

1. Kopfstütze (1) für ein Fahrzeug, wobei die Kopfstütze (1) ein Basiselement (2), an dem ein Flügelelement (3) mittels eines Scharniers (4) um eine im Wesentlichen vertikal verlaufende Achse drehbar gelagert ist, aufweist, wobei das Scharnier (4) für das Ausbilden einer Reibrastfunktionalität eine Welle (41) mit einem Vorsprung (43) und eine Buchse (42) mit einer dem Vorsprung (43) zugeordneten Aufnahme (44) aufweist, wobei die Welle (41) in der Buchse (42) gelagert ist und der Vorsprung (43) in einer Einraststellung in die Aufnahme (44) eingreift, **dadurch gekennzeichnet, dass** die Buchse (42) und die Welle (41) kegelstumpfförmig ausgestaltet sind..

2. Kopfstütze (1) nach Anspruch 1, wobei der Vorsprung (43) einen Nocken, die Aufnahme (44) eine Vertiefung aufweist, wobei die Aufnahme (44) komplementär zum Vorsprung (43) ausgestaltet ist.

3. Kopfstütze (1) nach einem der vorhergehenden Ansprüche, wobei das Scharnier (4) derart ausgebildet ist, dass einer Überführungsbewegung des Flügelelements (3) zwischen zwei Einraststellungen eine Reibkraft entgegenwirkt, wobei bei der Überführungsbewegung das Scharnier (4) eine Übergangsstellung einnimmt, in der der Vorsprung (43) außerhalb der Aufnahme (44) angeordnet ist.

4. Kopfstütze (1) nach einem der vorhergehenden Ansprüche, wobei das Flügelelement (3) zwischen einer nachhinten geklappten Einstellposition und einer nachvorne geklappten Einstellposition reversibel überführbar, wobei bevorzugt eine Innenseite der Buchse (42) im Wesentlichen konzentrisch zur Drehachse verläuft und wobei besonders bevorzugt sich die Aufnahme (44) teilweise oder vollständig im Wesentlichen parallel zur Drehachse entlang der Innenseite der Buchse (42) erstreckt.

5. Kopfstütze (1) nach einem der vorhergehenden Ansprüche, wobei sich der Vorsprung (43) entlang der Welle (41) im Wesentlichen parallel zur Drehachse, vorzugsweise vollständig über einem Bereich, der innerhalb der Buchse (42) angeordnet ist, erstreckt.

6. Kopfstütze (1) nach einem der vorhergehenden Ansprüche, wobei die Welle (41) basiselementseitig und die Buchse (42) flügelelementseitig angeordnet sind, wobei bevorzugt die Buchse (42) integraler Bestandteil des Flügelelements (3) und/oder die Welle (41) ein integraler Bestandteil des Basiselements (2) ist.

7. Kopfstütze (1) nach einem der vorhergehenden Ansprüche, wobei die Buchse (42), insbesondere die Innenseite der Buchse (42), zumindest teilweise elastisch deformierbar ausgestaltet ist und wobei das Scharnier (4) derart ausgebildet ist, dass der Vorsprung (43) in der Übergangsstellung die Buchse (42) elastisch deformiert.

8. Kopfstütze (1) nach einem der vorhergehenden Ansprüche, wobei für den Vorsprung (43) neben der Aufnahme (44) mindestens eine weitere Aufnahme (45) vorgesehen ist.

9. Kopfstütze (1) nach Anspruch 8, wobei sich die weitere Aufnahme (45) von der Aufnahme (44) in Hinblick auf Größe und/oder Form unterscheidet.

10. Kopfstütze (1) nach einem der vorhergehenden Ansprüche, wobei die Welle (41) eine Mehrzahl an Vorsprüngen (43), vorzugsweise vier Vorsprünge (43), aufweist.

11. Kopfstütze (1) nach einem der vorhergehenden Ansprüche, wobei ein Axialanschlag (48) und/oder eine Radialanschlag vorgesehen ist.

12. Kopfstütze (1) nach einem der vorhergehenden Ansprüche, wobei die Flügelelemente (3) in eine Vielzahl von Einstellpositionen relativ zu dem Basiselement (2) einstellbar sind.

13. Kopfstütze (1) nach einem der vorhergehenden Ansprüche, wobei jedes Flügelelement (3) eine Tragstruktur aufweist, die zweiteilig vorgesehen ist.

14. Verfahren zur Montage einer Kopfstütze (1) nach einem der vorhergehenden Ansprüche, wobei das Flügelelement (3) entlang einer im Wesentlichen horizontal verlaufenden Richtung bewegt wird bis die die Welle (41) in der Buchse (42) einrastet.

## Claims

1. Headrest (1) for a vehicle, wherein the headrest (1) has a basic element (2), on which a wing element (3) is mounted by means of a hinge (4) such that it can be rotated about an essentially vertically running axis, wherein, for forming a frictional-locking functionality, the hinge (4) has a shaft (41) with a protrusion (43) and also has a bushing (42) with a mount (44), which is assigned to the protrusion (43), wherein the shaft (41) is mounted in the bushing (42) and the protrusion (43), in a latching-in position, engages in the mount (44), **characterized in that** the bushing (42) and the shaft (41) are of frustoconical configuration.

2. Headrest (1) according to Claim 1, wherein the protrusion (43) has a protuberance and the mount (44) has a depression, wherein the mount (44) is configured to complement the protrusion (43).

3. Headrest (1) according to either of the preceding claims, wherein the hinge (4) is designed such that a frictional force counteracts a transfer movement of the wing element (3) between two latching-in positions, wherein, during the transfer movement, the hinge (4) assumes a transition position, in which the protrusion (43) is arranged outside the mount (44).

4. Headrest (1) according to one of the preceding claims, wherein the wing element (3) can be transferred in a reversible manner between a swung-back adjustment position and a swung-forward adjustment position, wherein preferably an inner side of the bushing (42) runs essentially concentrically in relation to the axis of rotation, and wherein particularly preferably the mount (44) extends along the inner side of the bushing (42) in part, or in its entirety, essentially parallel to the axis of rotation.

5. Headrest (1) according to one of the preceding claims, wherein the protrusion (43) extends along the shaft (41) essentially parallel to the axis of rotation, preferably in its entirety over a region which is arranged within the bushing (42).

6. Headrest (1) according to one of the preceding claims, wherein the shaft (41) is arranged on the basic element and the bushing (42) is arranged on the wing element, wherein preferably the bushing (42) is an integral constituent part of the wing element (3) and/or the shaft (41) is an integral constituent part of the basic element (2).

7. Headrest (1) according to one of the preceding claims, wherein the bushing (42), in particular the inner side of the bushing (42), is configured in an at least partially elastically deformable manner, and wherein the hinge (4) is designed such that the bushing (42) is deformed elastically by the protrusion (43) in the transition position.

8. Headrest (1) according to one of the preceding claims, wherein, alongside the mount (44), at least one further mount (45) is provided for the protrusion (43).

9. Headrest (1) according to Claim 8, wherein the further mount (45) differs from the mount (44) in respect of size and/or shape.

10. Headrest (1) according to one of the preceding claims, wherein the shaft (41) has a plurality of protrusions (43), preferably four protrusions (43).

11. Headrest (1) according to one of the preceding claims, wherein an axial stop (48) and/or a radial stop are/is provided.

12. Headrest (1) according to one of the preceding claims, wherein the wing elements (3) can be adjusted in a multiplicity of adjustment positions relative to the basic element (2).

13. Headrest (1) according to one of the preceding claims, wherein each wing element (3) has a carrying structure, which is provided in two parts.

14. Method for assembling a headrest (1) according to one of the preceding claims, wherein the wing element (3) is moved along an essentially horizontally running direction until the shaft (41) latches in the bushing (42).

## Revendications

1. Appui-tête (1) destiné à un véhicule, l'appui-tête (1) comportant un élément de base (2) sur lequel un élément formant aile (3) est monté de manière rotative sur un axe sensiblement vertical au moyen d'une charnière (4), la charnière (4) comportant un arbre (41), pourvu d'une saillie (43), et une douille (42), pourvue d'un logement (44) associé à la saillie (43), pour former une fonctionnalité d'encliquetage par friction, l'arbre (41) étant logé dans la douille (42) et la saillie (43) s'engageant dans une position d'encliquetage dans le réceptacle (44), **caractérisé en ce que** la douille (42) et l'arbre (41) ont la forme d'un cône tronqué.

2. Appui-tête (1) selon la revendication 1, la saillie (43) comportant une came, le logement (44) comportant un évidement, le logement (44) étant conçu de manière complémentaire de la saillie (43).

3. Appui-tête (1) selon l'une des revendications précédentes, la charnière (4) étant conçue de telle manière qu'un mouvement de transfert de l'élément formant aile (3) entre deux positions d'encliquetage s'oppose à une force de friction, la charnière (4) prenant pendant le mouvement de transfert une position de transfert dans laquelle la saillie (43) est disposée à l'extérieur du logement (44).

4. Appui-tête (1) selon l'une des revendications précédentes, l'élément formant aile (3) pouvant être transféré de manière réversible entre une position de réglage repliée vers l'arrière et une position de réglage repliée vers l'avant, un côté intérieur de la douille (42) s'étendant de préférence de manière sensiblement concentrique à l'axe de rotation et le logement (44) s'étendant de manière particulièrement préférée partiellement ou complètement de manière sensiblement parallèle à l'axe de rotation le long du côté intérieur de la douille (42).

5. Appui-tête (1) selon l'une des revendications précédentes, la saillie (43) s'étendant le long de l'arbre (41) de manière sensiblement parallèle à l'axe de rotation, de préférence complètement sur une zone qui est disposée à l'intérieur de la douille (42).

6. Appui-tête (1) selon l'une des revendications précédentes, l'arbre (41) étant disposé du côté de l'élément de base et la douille (42) étant disposée du côté de l'élément formant aile, la douille (42) faisant partie intégrante de l'élément formant aile (3) et/ou l'arbre (41) faisant partie intégrante de l'élément de base (2).

7. Appui-tête (1) selon l'une des revendications précédentes, la douille (42), en particulier le côté intérieur de la douille (42), étant au moins partiellement conçue pour être déformable élastiquement, et la charnière (4) étant conçue de telle sorte que la saillie (43) déforme élastiquement la douille (42) dans la position de transfert.

8. Appui-tête (1) selon l'une des revendications précédentes, au moins un autre logement (45) étant prévu pour la saillie (43) en plus du logement (44).

9. Appui-tête (1) selon la revendication 8, l'autre logement (45) différant du logement (44) en termes de taille et/ou de forme.

10. Appui-tête (1) selon l'une des revendications précédentes, l'arbre (41) comportant une pluralité de saillies (43), de préférence quatre saillies (43).

11. Appui-tête (1) selon l'une des revendications précédentes, une butée axiale (48) et/ou une butée radiale étant prévues.

12. Appui-tête (1) selon l'une des revendications précédentes, les éléments formant aile (3) étant réglables dans une multitude de positions de réglage par rapport à l'élément de base (2).

13. Appui-tête (1) selon l'une des revendications précédentes, chaque élément formant aile (3) comportant une structure de support qui est prévue en deux parties.

14. Procédé de montage d'un appui-tête (1) selon l'une des revendications précédentes, l'élément formant aile (3) étant déplacé le long d'une direction sensiblement horizontale jusqu'à ce que l'arbre (41) s'encliquète dans la douille (42).
